# EUROPÄISCHE PATENTSCHRIFT

(11) **EP 0 567 821 B1**
(45) Veröffentlichungstag und Bekanntmachung des Hinweises auf die Patenterteilung: **21.02.1996**
(21) Anmeldenummer: 93105847.3
(22) Anmeldetag: 08.04.1993
(51) Int. Cl.: F16L 3/10

(54) **Rohrschelle**
Pipe clamp
Collier de serrage

(30) Priorität: 29.04.1992 DE 4214052; 05.03.1993 DE 4306870
(43) Veröffentlichungstag der Anmeldung: 03.11.1993
(73) Patentinhaber: TOGE - Dübel A. Gerhard GmbH, D-90431 Nürnberg (DE)
(72) Erfinder: Gerhard, Anton, D-90431 Nürnberg (DE)
(74) Vertreter: Rau, Manfred, Dr. Dipl.-Ing.

(56) Entgegenhaltungen:
- EP-A- 0 471 989
- DE-A- 4 124 122
- DE-U- 9 202 982

## Beschreibung

Die Erfindung betrifft eine Rohrschelle nach den identischen Oberbegriffen der Ansprüche 1 und 5.

Eine derartige aus der EP-A-0 471 989 bekannte Rohrschelle weist einerseits einen Verriegelungsflansch und andererseits einen diesem zugeordneten Gewindeflansch auf in den eine Schließschraube eingeschraubt ist. Der Verriegelungsflansch weist eine Durchlaßöffnung auf, deren Durchmesser mindestens dem des Kopfes der Schließschraube entspricht. An dem Verriegelungsflansch ist weiterhin eine Fangplatte angebracht, die gegen die Kraft eines elastischen Gliedes um eine Schwenkachse von dem Verriegelungsflansch wegschwenkbar ist. Sie weist weiterhin eine Öffnung auf, deren Weite geringer ist als der Durchmesser des Kopfes der Schraube und die zu dem Rand der Fangplatte hin offen ist, der der Schwenkachse gegenüberliegt. Hierdurch ist ein provisorisches Schließen der Rohrschelle mit einer Hand in sicherer Weise möglich, wobei eine Verkürzung der Schraube nicht vorgesehen oder möglich ist.

Aus der EP-A-0 319 521 A2 ist eine Rohrschelle bekannt, die zwei Flansche aufweist, von denen einer mit einem Gewinde für eine Schraube versehen ist. Der andere zugeordnete Flansch weist eine Bohrung auf, deren Durchmesser etwas größer als der Kopf der Schraube ist. Beim Zusammendrücken der Rohrschelle wird dieser Flansch über den Schraubenkopf geschoben. Anschließend wird eine Unterlagscheibe mit einem Langloch auf diesen Flansch geschoben, wobei das Langloch die Schraube umgreift, so daß der Schraubenkopf ein Widerlager hat. Zweck dieser Ausgestaltung ist es, die Rohrschelle auch mit einer sehr kurzen Spannschraube gut handhaben und leicht schließen zu können.

Aus der EP-0 388 663 B1 ist weiterhin eine Rohrschelle bekannt, bei der ein schwenkbarer Schließbügel vorgesehen ist, der an einem Flansch schwenkbar angebracht ist und nach dem Zusammendrücken der beiden miteinander zu verbindenden Flansche über den anderen Flansch geschwenkt werden kann, so daß eine vorläufige Sicherung gegen ein unbeabsichtigtes Wiederöffnen der Rohrschelle gegeben ist.

Der Erfindung liegt die Aufgabe zugrunde, eine Rohrschelle der gattungsgemäßen Art so auszugestalten, daß ein Schließen der Rohrschelle mit nur einer Hand bis in den Bereich der Spannstellung der Schraube möglich ist.

Diese Aufgabe wird erfindungsgemäß bei einer Rohrschelle der gattungsgemäßen Art durch die Merkmale im jeweiligen Kennzeichnungsteil der Ansprüche 1 und 5 gelöst. Kern der Erfindung ist, daß beim Einschieben der Schraube durch den Widerlager-Flansch und die Verriegelungs-Platte letztere sich vom Widerlager-Flansch abhebt, wodurch ein Einschieben der Schraube bis in eine Lage ermöglicht wird, in der die Rohrschelle bereits zumindest teilweise verspannt ist. Durch Entlastung der Schraube legt sich die Verriegelungs-Platte wieder gegen den Widerlager-Flansch, wodurch das Außengewinde der Schraube im Teil-Innengewinde der Verriegelungs-Platte gehalten wird; die Schraube kann jetzt in normaler Weise durch Drehen verschraubt werden. Durch Verschwenken der Verriegelungs-Platte gegenüber dem Widerlager-Flansch wird der Zwangseingriff von Außengewinde und Innengewinde aufgehoben, so daß die Schraube wieder aus der Verriegelungs-Platte und dem Widerlager-Flansch herausgezogen werden kann.

Erfinderische Weiterbildungen, Einzelheiten und vorteilhafte Ausgestaltungen der Erfindung ergeben sich aus den Unteransprüchen und der nachfolgenden Beschreibung zweier Ausführungsbeispiele anhand der Zeichnung. Es zeigen
- Fig. 1: eine Rohrschelle nach der Erfindung in geöffnetem Zustand,
- Fig. 2: eine Rohrschelle in teilweise geschlossenem Zustand während des Schließ- oder Öffnungsvorganges,
- Fig. 3: eine Verriegelungs-Platte der Rohrschelle in Draufsicht,
- Fig. 4: eine Seitenansicht der Verriegelungs-Platte gemäß dem Sichtpfeil IV in Fig. 3,
- Fig. 5: eine weitere Seitenansicht der Verriegelungs-Platte gemäß dem Sichtpfeil V in Fig. 3,
- Fig. 6: eine Teil-Darstellung von Widerlager-Flansch und Verriegelungs-Platte entsprechend der Darstellung in Fig. 1,
- Fig. 7: eine Teil-Darstellung von Widerlager-Flansch und Verriegelungs-Platte entsprechend der Darstellung in Fig. 2,
- Fig. 8: eine Verriegelungs-Platte einer weiteren Ausführungsform einer Rohrschelle in Draufsicht,
- Fig. 9: eine Seitenansicht der Verriegelungs-Platte gemäß dem Sichtpfeil IX in Fig. 8,
- Fig. 10: eine weitere Seitenansicht der Verriegelungs-Platte gemäß dem Sichtpfeil X in Fig. 9 und
- Fig. 11: eine Fig. 6 entsprechende Teil-Darstellung von Widerlager-Flansch und Verriegelungs-Platte.

Die in der Zeichnung dargestellte Rohrschelle weist zwei etwa halbkreisförmige Bügel 1, 2 auf, die eine gemeinsame Mittelachse 3 haben. Der eine Bügel 1 ist an einem Ende mit einem etwa radial zur Mittelachse 3 abstehenden Gewinde-Flansch 4 versehen, der mit einer Gewindebohrung 5 versehen ist. Am anderen Ende ist dieser Bügel 1 mit einem ebenfalls etwa radial zur Mittelsachse 3 abstehenden Widerlager-Flansch 6 ausgebildet, auf den weiter unten noch genauer eingegangen wird. Mittig zwischen den beiden Flanschen 4, 6 ist auf der Außenseite des Bügels 1 eine Befestigungseinrichtung 7 in Form einer Mutter durch Schweißen befestigt. Hiermit kann die Rohrschelle an einem entsprechenden Gewindebolzen an einer Decke, an einer Wand oder einem sonstigen Traggerüst befestigt werden. Dieser Teil der Rohrschelle, d.h. dieser Bügel 1 wird somit bei einer derartigen Befestigung ortsfest festgelegt.

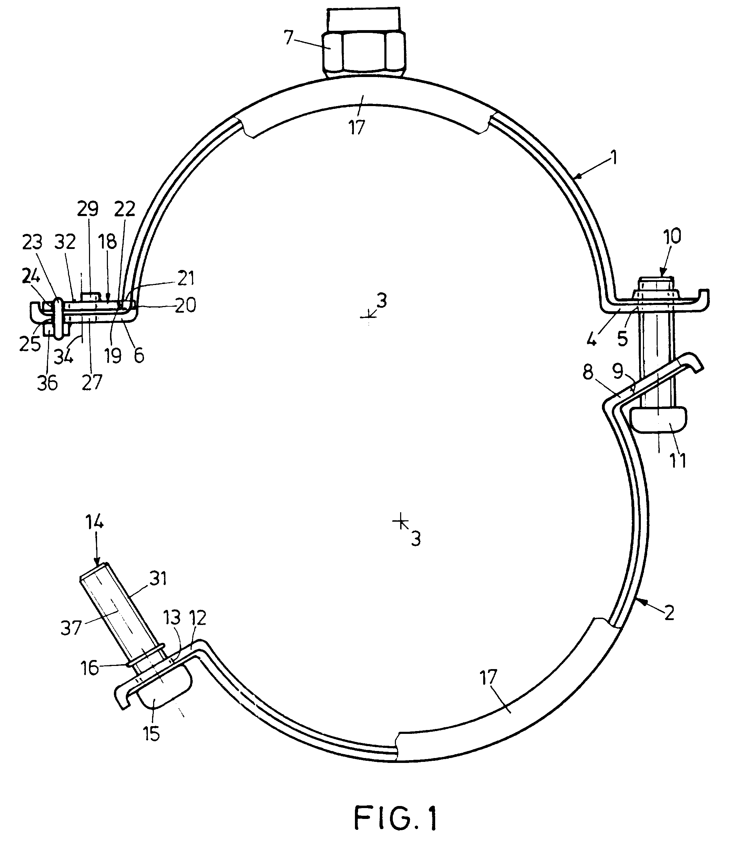

Der andere Bügel 2 ist an seinem einen Ende mit einem dem Gewinde-Flansch 4 zugeordneten Gelenk-Flansch 8 versehen, in dem ein Langloch 9 ausgebildet ist. Durch dieses Langloch 9 ist eine Schraube 10 hindurchgesteckt, die in die Gewindebohrung 5 des Gewinde-Flansches 4 geschraubt ist. Der Kopf 11 der Schraube 10 ist auf der Außenseite des Gelenk-Flansches 8 angeordnet. Wie Fig. 1 erkennen läßt, ist aufgrund des Langloches 9, dessen Längsrichtung radial zur Mittelachse 3 verläuft, der Bügel 2 gegenüber dem Bügel 1 um die Schraube 10 verschwenkbar, wenn der Gewinde-Flansch 4 und der Gelenk-Flansch 8 nicht mittels der Schraube 10 fest gegeneinander verspannt sind, sondern einen ausreichenden Abstand voneinander aufweisen.

Am schwenkbaren Bügel 2 ist gegenüber dem Gelenk-Flansch 8 ein einfacher Loch-Flansch 12 ausgebildet, der mit einer einfachen Bohrung 13 versehen ist. Alle vier Flansche 4, 6, 8, 12 sind starr und einstückig mit dem jeweiligen Bügel 1 bzw. 2 ausgebildet. Durch die Bohrung 13 des Loch- Flansches 12 ist eine der Schraube 10 gleiche Schraube 14 hindurchgesteckt, die einen dem Widerlager-Flansch 6 abgewandten Kopf 15 aufweist. Die Schraube 14 ist auf ihrer dem Widerlager-Flansch 6 zugewandten Seite, benachbart zum Loch-Flansch 12 mit einem Sicherungsring 16, beispielsweise einem dünnen Gummiring versehen, mittels dessen verhindert wird, daß bei nicht geschlossener Rohrschelle die Schraube 14 aus dem Loch-Flansch 12 herausfällt. Die Bügel 1, 2 sind üblicherweise an ihrer Innenseite mit Gummi-Manschetten 17 versehen, die in der Zeichnung nur angedeutet sind.

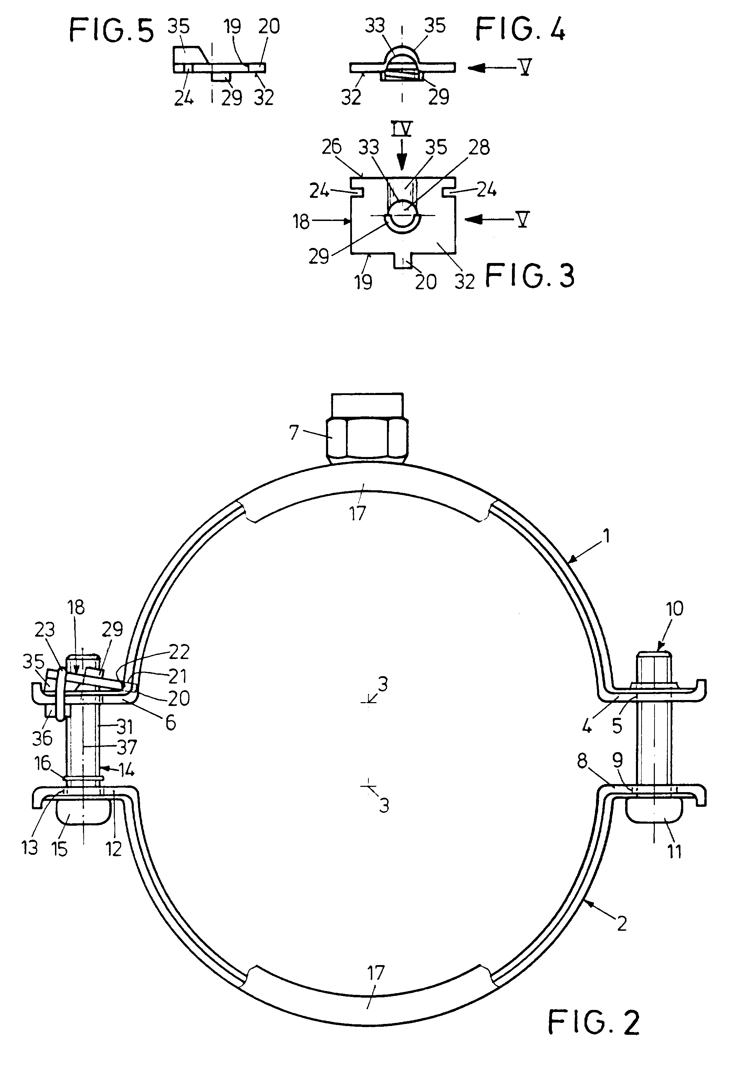

Auf der dem Loch-Flansch 12 abgewandten Außenseite des Widerlager-Flansches 6 ist auf diesem eine Verriegelungs-Platte 18 angeordnet. Diese Verriegelungs-Platte 18 weist eine dem Bügel 1 zugewandte, parallel zur Mittelachse 3 verlaufende Kante 19 auf, von der ein Vorsprung 20 vorragt. Dieser greift in eine Ausnehmung 21 des Bügels 1 ein, die am Übergangsbereich zwischen Bügel 1 und Widerlager-Flansch 6 ausgebildet ist. Die Verriegelungs-Platte 18 kann hierdurch um eine im Bereich der Kante 19 liegende Schwenkachse 22 relativ zum Widerlager-Flansch 6 verschwenkt werden, wie unter anderem aus Fig. 2 hervorgeht. In dem der Schwenkachse 22 entfernten radial außenliegenden Bereich sind der Widerlager-Flansch 6 und die Verriegelungs-Platte 18 mittels eines elastischen Gliedes 23 miteinander verbunden, das die Verriegelungs-Platte 18 in eine am Widerlager-Flansch 6 anliegende Stellung zieht. Hierbei kann es sich um einen Gummiring handeln, der in entsprechende Ausnehmungen 24, 25 in der Platte 18 bzw. im Flansch 6 in der Nähe des radial außenliegenden Randes 26 der Platte 18 eingreift. Hierdurch wird die Verriegelungs-Platte 18 auch radial zur Mittelachse 3 gegenüber dem Widerlager-Flansch 6 festgelegt.

Der Widerlager-Flansch 6 weist eine Durchlaßöffnung 27 auf, die dem Außendurchmesser d der Schraube 14 angepaßt ist, so daß diese durch die Durchlaß-Öffnung 27 hindurchgeschoben werden kann. Die Verriegelungs-Platte 18 weist eine Verriegelungs-Öffnung 28 auf, die mit der Durchlaß-Öffnung 27 fluchtet, wenn die Verriegelungs-Platte 18 entsprechend der Darstellung in Fig. 1 an dem Widerlager-Flansch 6 anliegt. Diese Verriegelungs-Öffnung 28 wird auf ihrer der Schwenkachse 22 zugewandten Seite von einem Halb-Gewinde-Stutzen 29 begrenzt. Dieser weist ein Innengewinde 30 auf, das dem Außengewinde 31 der Schraube 14 entspricht. Der Halb-Gewinde-Stutzen 29 erstreckt sich vom Widerlager-Flansch 6 weg. Das Innengewinde 30 beginnt etwa bündig mit der dem Widerlager-Flansch 6 abgewandten Außenfläche 32 der Verriegelungs-Platte 18. Auf der dem Halb-Gewinde-Stutzen 29 gegenüberliegenden Seite wird die Verriegelungs-Öffnung 28 durch einen in der Projektion auf die Außenfläche 32 etwa halbkreisförmigen Steg 33 begrenzt, der in Richtung der Längsachse 34 der Verriegelungs-Öffnung 28 in Richtung zum Loch-Flansch 12 hin gegenüber dem Halb-Gewinde-Stutzen 29 versetzt ist. Die Langsachse 34 ist in dem Fall, wo die Verriegelungs-Platte 18 entsprechend Fig. 1 an dem Widerlager-Flansch 6 anliegt identisch mit der nicht gesondert dargestellten Mittelachse der Durchlaß-Öffnung 27. Der etwa halbkreisförmige Steg 33 ist durch eine teilzylindrische Ausbauchung 35 in der Verriegelungs-Platte 18 gebildet. Sie liegt in einer entsprechenden teilzylindrischen Ausbauchung 36 des Widerlager-Flansches 6. Die teilzylindrische Ausbauchung 36 erstreckt sich von der Durchlaß-Öffnung 27 radial zur Mittelachse 3 nach außen. Gleiches gilt für die teilzylindrische Ausbauchung 35 bezogen auf die Mittelachse 3 bzw. die hierzu parallele Schwenkachse 22.

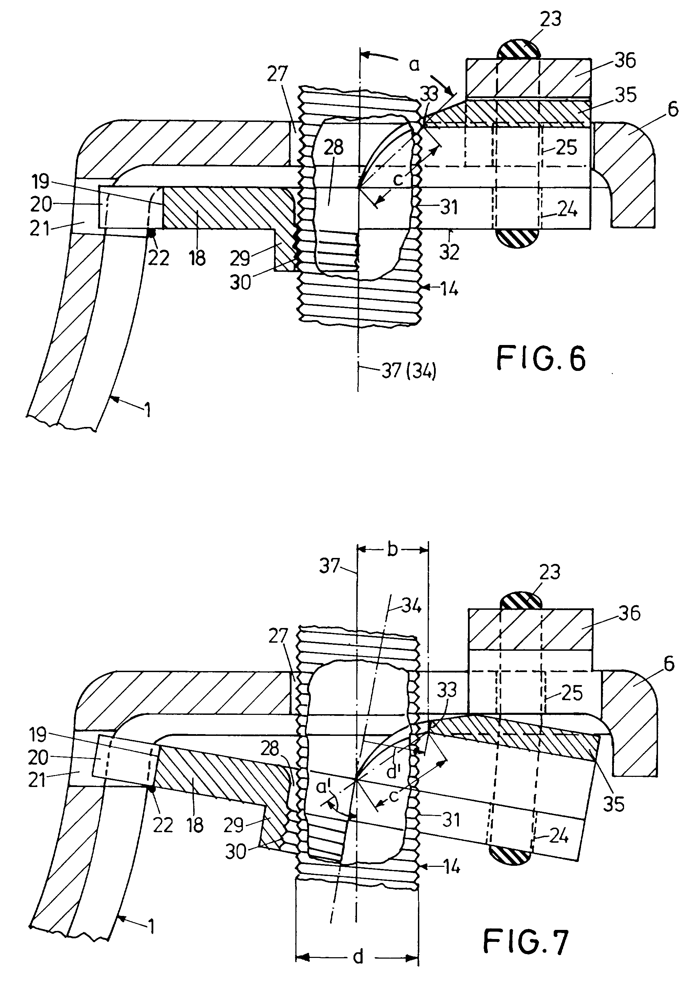

Wenn die Verriegelungs-Platte 18 unter der Spannung des elastischen Gliedes 23 am Widerlager-Flansch 6 anliegt und demzufolge die Längsachse 34 der Verriegelungs-Öffnung 28 mit der Mittel-Längs-Achse 37 der Schraube 14 zusammenfällt, dann liegt der Steg 33 über einen halben Umfang am Außengewinde 31 der Schraube 14 an; der Innendurchmesser d' des etwas halbkreisförmigen Steges 33 entspricht also bezogen auf die Längsachse 34 etwa dem Außendurchmesser des Außengewindes 31 der Schraube 14, wobei er selbstverständlich um einige Zehntel Millimeter größer ist. Wenn also die Achsen 37 und 34 zusammenfallen, wird das Außengewinde 31 der Schraube 14 in das Innengewinde 30 des Halb-Gewinde-Stutzens 29 hineingedrückt; die Schraube 14 ist in Richtung ihrer Mittel-Längs-Achse 37 fest in der Verriegelungs-Platte 18 gehalten und kann lediglich durch Verdrehen, also durch Schrauben, axial zur Verriegelungs-Platte 18 bewegt werden. In dieser Stellung liegt der Steg 33 mit einer in der Projektion relativ zur Mittel-Längs-Achse 37 der Schraube 14 halbkreisförmigen Fläche am Außengewinde 31 an, wobei der Steg 33 - wie aus den Fig. 6 und 7 hervorgeht - zur Längsachse 34 und damit in dieser Stellung auch zur Mittel-Längs-Achse 37 nicht normal, sondern unter einem Winkel a von 45 bis 60° verläuft.

Wenn dagegen - entsprechend Fig. 7 - die Verriegelungs-Platte 18 um die Schwenkachse 22 unter Abheben von dem Widerlager-Flansch 6 verschwenkt wird, dann wird der Winkel a' zwischen dem Steg und der in unveränderter Lage befindlichen Mittel-Längs-Achse 37 der Schraube 14 größer. Der Steg 33 bekommt also relativ zur Mittel-Längs-Achse 37 einen größeren Radius b, der im maximalen Grenzfall c wird, wie den Fig. 6 und 7 entnehmbar ist. Durch dieses Verschwenken kommt einerseits das Außengewinde 31 der Schraube 14 außer Eingriff mit dem Innengewinde 30 des Halb-Gewinde-Stutzens 29 und kommt ausreichend frei vom Steg 33. Die Schraube 14 kann also frei in beiden Richtungen ihrer Mittel-Längs-Achse 37 durch die Verriegelungs-Öffnung 28 geschoben werden.

Das Schließen der Rohrschelle, d.h. das Verriegeln der Schraube 14 mit der Verriegelungs-Platte 18 geht wie folgt vor sich. Die Ausgangsstellung ist in Fig. 1 dargestellt. Wenn ein nicht dargestelltes Rohr in den Bügel 1 eingelegt und der Bügel 2 um das Rohr herumgeschwenkt ist, dann wird der Bügel 2 hochgeschwenkt und die Schraube 14 durch die Durchlaß-Öffnung 27 des Widerlager-Flansches 6 hindurch in die Verriegelungs-Öffnung 28 der Verriegelungs-Platte 18 gedrückt. Hierbei wird die Verriegelungs-Platte 18 gegen die Kraft des elastischen Gliedes 23 um die Schwenkachse 22 in die in den Fig. 2 bzw. 7 dargestellte Stellung verschwenkt, bis die Verriegelungs-Öffnung 28 aufgrund der geschilderten Ausgestaltung quer zur Mittel-Längs-Achse 37 der Schraube 14 so groß ist, daß die Schraube 14 mit ihrem Außengewinde 31 durch die Verriegelungs-Öffnung 28 hindurchrutschen kann. Am Ende dieser Durchschubbewegung wird der Druck auf den Kopf 15 der Schraube 14 beendet mit der Folge, daß das elastische Glied 23 die Verriegelungs-Platte 18 bis zur Anlage gegen den Widerlager-Flansch 6 zurückzieht. Die Schraube 14 ist jetzt in der geschilderten Weise mit ihrem Außengewinde 31 im Innengewinde 30 des Halb-Gewinde-Stutzens 29 festgelegt. Die Schraube 14 kann jetzt noch mit einigen wenigen Umdrehungen festgespannt werden. Selbstverständlich wird die Schraube 10 auch angezogen. Zum Lösen der Verriegelung der Schraube 14 wird diese um einige Umdrehungen gelöst. Anschließend wird die Verriegelungs-Platte 18 mit den Enden oder mittels eines Schraubendrehers um die Schwenkachse 22 in die in Fig. 2 und 7 dargestellte Stellung verschwenkt, wodurch das Außengewinde 31 der Schraube 14 in der geschilderten Weise vom Innengewinde 30 des Halb-Gewinde-Stutzens 29 frei kommt. Die Schraube kann dann herausgezogen werden.

Wenn die Bügel 1, 2 - wie in den Fig. 1 und 2 angedeutet - mit Gummi-Manschetten 17 versehen sind, die also radial zur Mittelachse 3 elastisch nachgiebig sind, dann kann das Verriegeln der Schraube 14 ohne Schraubendreher nur mit Hilfe einer Zange durchgeführt werden, indem nämlich der Loch-Flansch 12 zusammen mit dem Kopf 15 der Schraube 14 einerseits und der Widerlager-Flansch 6 andererseits unter starker Verformung der Gummi-Manschetten 17 zusammengedrückt werden, wodurch die Schraube 14 über ihre endgültige Stellung hinaus durch die Durchlaß-Öffnung 27 des Widerlager-Flansches 6 hindurchgeschoben wird. Beim anschließenden Löslassen schwenkt die Verriegelungs-Platte 18 zurück, wodurch die elastischen Gummi-Manschetten 17 wieder etwas entspannt werden, aber immer noch so stark verspannt sind, daß das Rohr zwischen ihnen ausreichend fest gehalten wird. Auch hierbei kann das Lösen der Verbindung entsprechend erfolgen.

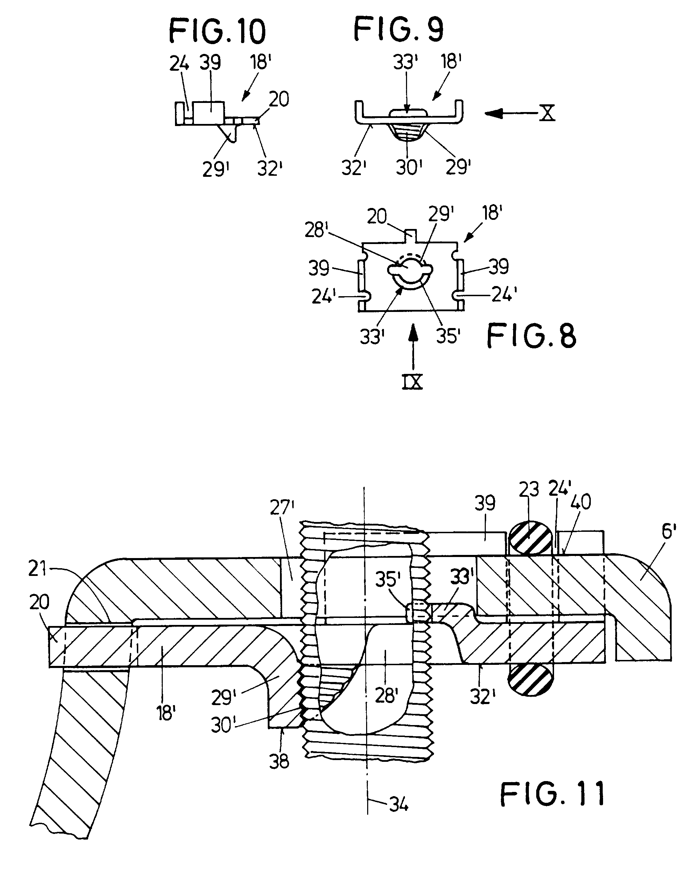

Die abgewandelte Ausführungsform nach den Fig. 8 bis 11 unterscheidet sich von der bisher beschriebenen Ausführungsform im wesentlichen dadurch, daß die Verriegelungs-Platte 18' nicht mit einem Halb-Gewinde-Stutzen, sondern nur einem Teil-Gewinde-Stutzen 29' versehen ist, der sich über weniger als 180° bezogen auf die Achse 34 erstreckt. Das Innengewinde 30' beginnt auch hierbei etwa bündig mit der dem Widerlager-Flansch 6' abgewandten Außenfläche 32' der Verriegelungs-Platte 18'. In diesem Bereich erstreckt es sich über einen Umfangswinkel von etwa 120 bis 160°, keinesfalls aber unter 90°. Der Teil-Gewinde-Stutzen 29' verjüngt sich zum freien Ende 38 hin. Entsprechendes gilt für das Innengewinde 30'.

Auf der dem Teil-Gewinde-Stutzen 29' gegenüberliegenden Seite wird die Verriegelungsöffnung 28' durch einen in der Projektion auf die Außenfläche 32' etwa halbkreisförmigen Steg 33 ' begrenzt, der ebenfalls in Richtung der Längsachse 34 der Verriegelungs-Öffnung 28' in Richtung zum Loch-Flansch 12 hin gegenüber dem Teil-Gewinde-Stutzen 29' versetzt ist. Der etwa halbkreisförmige Steg 33' ist durch eine teilzylinderringförmige Ausbauchung 35' in der Verriegelungs-Platte 18' gebildet. Sie liegt in der in diesem Bereich entsprechend vergrößerten Durchlaß-Öffnung 27' des Widerlager-Flansches 6'.

Bei dieser Ausgestaltung weist die Verriegelungs-Platte 18' seitliche Wangen 39 auf, die von den Ausnehmungen 24' durchsetzt sind. Diese seitlichen Wangen 39 umgreifen die Seitenränder des Widerlager-Flansches 6'. Da der Widerlager-Flansch 6' nicht mit einer Ausbauchung 36 versehen ist, liegt das elastische Glied 23 unmittelbar an dessen dem Loch-Flansch 12 zugewandter Fläche 40 an.

Durch die Ausgestaltung des Teil-Gewinde-Stutzens 29' wird erreicht, daß beim Durchschieben der Schraube 14 durch die Durchlaß-Öffnung 27 und die Verriegelungs-Öffnung 28 die Verriegelungs-Platte 18' nicht so weit von dem Widerlager-Flansch 6' weggeschwenkt werden muß, wie in Fig. 7 dargestellt ist. Durch den Wegfall der Ausbauchung 36 können der Loch-Flansch 12 und der Widerlager-Flansch 6' dichter zusammengespannt werden. Am Wirkungsprinzip ändert sich nichts. Soweit diese Ausführungsform nicht neu beschrieben wurde, gelten die obigen Ausführungen.

Selbstverständlich brauchen die beiden Bügel 1, 2 auf der dem Loch-Flansch 12 und dem Widerlager-Flansch 6 bzw. 6' gegenüberliegenden Seite nicht zwingend mittels der Schraube 10 miteinander verbunden zu sein. Sie können auch - wie bei kleinen Rohrschellen üblich - insgesamt einstückig ausgebildet sein und in dem Bereich, wo in den Fig. 1 und 2 die Flansche 4 und 8 dargestellt sind, aufbiegbar ausgebildet sein, beispielsweise durch eine entsprechende Schwächung in diesem Bereich, z.B. durch ein Loch. Auch bei einer derartigen Ausgestaltung liegt hier ein Gelenk vor. Entscheidend kommt es nur darauf an, daß die beiden Bügel 1, 2 geöffnet werden können, damit sie über ein Rohr geschoben werden können.

## Patentansprüche

1. Rohrschelle, bestehend aus zwei etwa halbkreisförmigen, etwa eine gemeinsame Mittelachse (3) aufweisenden, an ihrem einen Ende mittels eines Gelenks miteinander verbundenen Bügeln (1, 2), wobei der eine Bügel (2) an seinem anderen Ende mit einem Loch-Flansch (12) versehen ist, in dem eine Schraube (14) angeordnet ist, und wobei der andere Bügel (1) an seinem anderen Ende mit einem dem Loch-Flansch (12) zugeordneten Flansch (6) versehen ist, der mit einer Einrichtung zur Aufnahme des Außengewindes (31) der Schraube (14) versehen ist, dadurch gekennzeichnet, daß der als Widerlager-Flansch (6) ausgebildete Flansch eine Durchlaß-Öffnung (27) aufweist, deren Durchmesser mindestens dem des Außengewindes (31) der Schraube (14) entspricht, und daß auf der dem Loch-Flansch (12) abgewandten Seite des Widerlager-Flansches (6) an diesem eine Verriegelungs-Platte (18) angeordnet ist, die gegen die Kraft eines elastischen Gliedes (23) um eine Schwenkachse (22) von dem Widerlager-Flansch (6) wegschwenkbar ist, und die eine Verriegelungs-Öffnung (28) aufweist, die auf einer Seite durch ein etwa halbzylindrisches, dem Außengewinde (31) der Schraube (14) entsprechendes Innengewinde (30) und auf der anderen Seite durch einen in Richtung der Längsachse (34) der Verriegelungs-Öffnung (28) gegenüber dem Innengewinde (30) versetzten Anschlag (33) begrenzt wird, wobei bei am Widerlager-Flansch (6) anliegender Verriegelungs-Platte (18) das Außengewinde (31) der Schraube (14) durch den Anschlag (33) im Innengewinde (30) der Verriegelungs-Öffnung (28) gehalten ist, während bei gegenüber dem Widerlager-Flansch (6) verschwenkter Verriegelungs-Platte (18) das Außengewinde (31) der Schraube (14) gegenüber dem Innengewinde (30) der Verriegelungs-Öffnung (28) frei ist.

2. Rohrschelle nach Anspruch 1, dadurch gekennzeichnet, daß das Innengewinde (30) in einem Halb-Gewinde-Stutzen (29) ausgebildet ist, der auf der dem Widerlager-Flansch (6) abgewandten Außenfläche (32) der Verriegelungs-Platte (18) ausgebildet ist.

3. Rohrschelle nach einem der Ansprüche 1 oder 2, dadurch gekennzeichnet, daß der Anschlag (33) in einer Ausbauchung (35) der Verriegelungs-Platte (18) ausgebildet ist.

4. Rohrschelle nach Anspruch 3, dadurch gekennzeichnet, daß die Ausbauchung (35) der Verriegelungs-Platte (18) in einer angepaßten Ausbauchung (36) des Widerlager-Flansches (6) angeordnet ist.

5. Rohrschelle, bestehend aus zwei etwa halbkreisförmigen, etwa eine gemeinsame Mittelachse (3) aufweisenden, an ihrem einen Ende miteinander verbundenen Bügeln (1, 2), wobei der eine Bügel (2) an seinem anderen Ende mit einem Loch-Flansch (12) versehen ist, in dem eine Schraube (14) angeordnet ist, und wobei der andere Bügel (1) an seinem anderen Ende mit einem dem Loch-Flansch (12) zugeordneten Flansch (6') versehen ist, der mit einer Einrichtung zur Aufnahme des Außengewindes (31) der Schraube (14) versehen ist, dadurch gekennzeichnet, daß der als Widerlager-Flansch (6') ausgebildete Flansch eine Durchlaß-Öffnung (27') aufweist, deren Durchmesser mindestens dem des Außengewindes (31) der Schraube (14) entspricht, und daß auf der dem Loch-Flansch (12) abgewandten Seite des Widerlager-Flansches (6') an diesem eine Verriegelungs-Platte (18') angeordnet ist, die gegen die Kraft eines elastischen Gliedes (23) um eine Schwenkachse (22) von dem Widerlager-Flansch (6') wegschwenkbar ist, und die eine Verriegelungs-Öffnung (28') aufweist, die auf einer Seite durch ein teilzylindrisches, dem Außengewinde (31) der Schraube (14) entsprechendes Innengewinde (30') und auf der anderen Seite durch einen in Richtung der Längsachse (34) der Verriegelungs-Öffnung (28') gegenüber dem Innengewinde (30') versetzten Anschlag (33') begrenzt wird, wobei bei am Widerlager- Flansch (6') anliegender Verriegelungs-Platte (18') das Außengewinde (31) der Schraube (14) durch den Anschlag (33') im Innengewinde (30') der Verriegelungs-Öffnung (28') gehalten ist, während bei gegenüber dem Widerlager-Flansch (6') verschwenkter Verriegelungs-Platte (18') das Außengewinde (31) der Schraube (14) gegenüber dem Innengewinde (30') der Verriegelungs-Öffnung (28') frei ist.

6. Rohrschelle nach Anspruch 5, dadurch gekennzeichnet, daß das Innengewinde (30') in einem Teil-Gewinde-Stutzen (29') ausgebildet ist, der auf der dem Widerlager-Flansch (6') abgewandten Außenfläche (32') der Verriegelungs-Platte (18') ausgebildet ist.

7. Rohrschelle nach Anspruch 5 oder 6, dadurch gekennzeichnet, daß das teilzylindrische Innengewinde (30') sich über 120 bis 160° erstreckt.

8. Rohrschelle nach einem der Ansprüche 1 bis 7, dadurch gekennzeichnet, daß der Anschlag als Steg (33, 33') der Verriegelungs-Platte (18, 18') ausgebildet ist.

9. Rohrschelle nach einem der Ansprüche 5 bis 8, dadurch gekennzeichnet, daß der Anschlag (33') der Verriegelungs-Platte (18') in die Durchlaß-Öffnung (27') eingreift.

10. Rohrschelle nach einem der Ansprüche 1 bis 9, dadurch gekennzeichnet, daß das elastische Glied (23) in einem von der Schwenkachse (22) entfernten Bereich von Widerlager-Flansch (6, 6') und Verriegelungs-Platte (18, 18') angreift.

## Claims

1. Pipe clamp, consisting of two approximately semicircular clamps (1, 2) with an approximately common central axis (3), the two clamps (1, 2) being connected with each other at one of their ends by means of a joint, one clamp (2) being provided at its other end with a flange with holes (12) in which a screw (14) is arranged, and the other clamp (1) at its other end being provided with a flange (6) associated with the flange with holes (12), this flange (6) comprising an arrangement for the acommodation of the external thread (31) of the screw (14), characterized in that the flange designed as abutment flange (6) comprises a through-hole (27) the diameter of which corresponds at least to the external thread (31) of the screw (41) and that a locking plate (18) is arranged on the side of the abutment flange (6) facing away from the flange with holes (12), this locking plate (18) being pivotable away from the abutment flange (6) against the force of an elastic member (23) along a pivoting axis (22) and comprising a lock opening (28) which is delimited on one side by an approximately half-cylindrical internal thread (30) corresponding to the external thread (31) of the screw (14), and on the other side by a stop (33) which is staggered opposite the internal thread (30) in relation to the longitudinal axis (34) of the lock opening (28), the external thread (31) of the screw (14) being held in the internal thread (30) of the lock opening (28) by the stop (33) with the locking plate (18) being adjacent to the abutment flange (6), whereas the external thread (31) of the screw (14) is exposed in relation to the internal thread (30) with the locking plate (18) being pivoted in relation to the abutment flange (6).

2. Pipe clamp according to claim 1, characterized in that the internal thread (30) is formed in a half-threaded socket (29), which is formed on the outer surface (32) of the locking plate (18), the outer surface (32) facing away from the abutment flange (6).

3. Pipe clamp according to one of the claims 1 or 2, characterized in that the stop (33) is formed in a protuberance (35) of the locking plate (18).

4. Pipe clamp according to claim 3, characterized in that the protuberance (35) of the locking plate (18) is arranged in an adapted protuberance (36) of the abutment flange (6).

5. Pipe clamp, consisting of two approximately semicircular clamps (1, 2) with an approximately common central axis (3), the two clamps (1, 2) being connected with each other at one of their ends, one clamp (2) being provided at its other end with a flange with holes (12) in which a screw (14) is arranged, and the other clamp (1) at its other end being provided with a flange (6') associated with the flange with holes (12), this flange (6') comprising an arrangement for the acommodation of the external thread (31) of the screw (14), characterized in that the flange designed as abutment flange (6') comprises a through-hole (27') the diameter of which corresponds at least to the external thread (31) of the screw (41) and that a locking plate (18') is arranged on the side of the abutment flange (6') facing away from the flange with holes (12), this locking plate (18') being pivotable away from the abutment flange (6') against the force of an elastic member (23) along a pivoting axis (22) and comprising a lock opening (28') which is delimited on one side by a partially cylindrical internal thread (30') corresponding to the external thread (31) of the screw (14), and on the other side by a stop (33') which is staggered opposite the internal thread (30') in relation to the longitudinal axis (34) of the lock opening (28'), the external thread (31) of the screw (14) being held in the internal thread (30) of the lock opening (28') by the stop (33') with the locking plate (18') being adjacent to the abutment flange (6'), whereas the external thread (31) of the screw (14) is exposed in relation to the internal thread (30') with the locking plate (18') being pivoted in relation to the abutment flange (6').

6. Pipe clamp according to claim 5, characterized in that the internal thread (30') is formed in a partially threaded socket (29'), which is formed on the outer surface (32') of the locking plate (18'), the outer surface (32') facing away from the abutment flange (6').

7. Pipe clamp according to claim 5 or 6, characterized in that the partially cylindrical internal thread (30') extends over 120 to 160°.

8. Pipe clamp according to one of claims 1 through 7, characterized in that the stop is formed as a web (33, 33') of the locking plate (18, 18').

9. Pipe clamp according to one of claims 5 through 8, characterized in that the stop (33') of the locking plate (18') engages into the through-hole (27').

10. Pipe clamp according to one of claims 1 through 9, characterized in that the elastic member (23) engages in an area of the abutment flange (6, 6') and the locking plate (18, 18'), this area being remote from the pivoting axis (22).

## Revendications

1. Collier de serrage, constitué de deux étriers (1, 2) à peu près de forme semi-circulaire, présentant sensiblement un axe central (3) commun et reliés ensemble à l'une de leurs extrémités au moyen d'une articulation, l'un des étriers (2) étant pourvu, à son autre extrémité, d'une bride perforée (12) dans laquelle est disposée une vis (14), l'autre étrier (1) étant pourvu, à son autre extrémité, d'une bride (6) associée à la bride perforée (12) et pourvue d'un dispositif destiné à recevoir le filetage mâle (31) de la vis (14), caractérisé en ce que la bride, réalisée sous forme d'une bride de contre-appui (6), présente une ouverture de passage (27) dont le diamètre correspond au moins au diamètre du filetage mâle (31) de la vis (14), et en ce que sur la face, tournée à l'opposé de la bride perforée (12), de la bride de contre-appui (6), est disposée sur celle-ci une plaque de verrouillage (18) qui peut être écartée de la bride de contre-appui (6), en pivotant autour d'un axe de pivotement (22), à l'encontre de la force d'un organe élastique (23), et qui présente une ouverture de verrouillage (28) délimitée, d'un côté, par un taraudage (30) à peu près hémi-cylindrique, correspondant au filetage mâle (31) de la vis (14), et, de l'autre côté, par une butée (33) décalée par rapport, au taraudage (30), dans la direction de l'axe longitudinal (34) de l'ouverture de verrouillage (28), le filetage mâle (31) de la vis (14), lorsque la plaque de verrouillage (18) est en appui sur la bride de contre-appui (6), étant maintenu par la butée (33) dans le taraudage (30) de l'ouverture de verrouillage (28), tandis que, lorsque la plaque de verrouillage (18) est déplacée par pivotement par rapport à la bride de contre-appui (6), le filetage mâle (31) de la vis (14) est libre vis-à-vis du taraudage (30) de l'ouverture de verrouillage (28).

2. Collier de serrage selon la revendication 1, caractérisé en ce que le taraudage (30) est réalisé dans un demi-embout taraudé (29), qui est formé sur la surface extérieure (32), tournée à l'opposé de la bride de contre-appui (6), de la plaque de verrouillage (18).

3. Collier de serrage selon l'une des revendications 1 ou 2, caractérisé en ce que la butée (33) est réalisée dans une protubérance (35) de la plaque de verrouillage (18).

4. Collier de serrage selon la revendication 3, caractérisé en ce que la protubérance (35) de la plaque de verrouillage (18) est disposée dans une protubérance (36) adaptée de la bride de contre-appui (6).

5. Collier de serrage, constitué de deux étriers (1, 2) à peu près de forme semi-circulaire, présentant sensiblement un axe central (3) commun et reliés ensemble à l'une de leurs extrémités, l'un des étriers (2) étant pourvu, à son autre extrémité, d'une bride perforée (12) dans laquelle est disposée une vis (14), l'autre étrier (1) étant pourvu, à son autre extrémité, d'une bride (6') associée à la bride perforée (12) et pourvue d'un dispositif destiné à recevoir le filetage mâle (31) de la vis (14), caractérisé en ce que la bride, réalisée sous forme d'une bride de contre-appui (6') présente une ouverture de passage (27') dont le diamètre correspond au moins au diamètre du filetage mâle (31) de la vis (14), et en ce que sur la face, tournée à l'opposé de la bride perforée (12), de la bride de contre-appui (6'), est disposée sur celle-ci une plaque de verrouillage (18') qui peut être écartée de la bride de contre-appui (6'), en pivotant autour d'un axe de pivotement (22), à l'encontre de la force d'un organe élastique (23), et qui présente une ouverture de verrouillage (28') délimitée, d'un côté, par un taraudage (30') cylindrique partiel, correspondant au filetage mâle (31) de la vis (14), et, de l'autre côté, par une butée (33') décalée par rapport au taraudage (30'), dans la direction de l'axe longitudinal (34) de l'ouverture de verrouillage (28'), le filetage mâle (31) de la vis (14), lorsque la plaque de verrouillage (18') est en appui sur la bride de contre-appui (6'), étant maintenu par la butée (33') dans le taraudage (30') de l'ouverture de verrouillage (28'), tandis que, lorsque la plaque de verrouillage (18') est déplacée par pivotement par rapport à la bride de contre-appui (6'), le filetage mâle (31) de la vis (14) est libre vis-à-vis du taraudage (30') de l'ouverture de verrouillage (28').

6. Collier de serrage selon la revendication 5, caractérisé en ce que le taraudage (30') est réalisé dans un embout taraudé partiel (29'), qui est formé sur la surface extérieure (32'), tournée à l'opposé de la bride de contre-appui (6'), de la plaque de verrouillage (18').

7. Collier de serrage selon la revendication 5 ou 6, caractérisé en ce que le taraudage cylindrique partiel (30') s'étend sur 120 à 160°.

8. Collier de serrage selon l'une des revendications 1 à 7, caractérisé en ce que la butée est réalisée sous forme d'une nervure (33, 33') de la plaque de verrouillage (18, 18').

9. Collier de serrage selon l'une des revendications 5 à 8, caractérisé en ce que la butée (33') de la plaque de verrouillage (18') s'engage dans l'ouverture de passage (27').

10. Collier de serrage selon l'une des revendications 1 à 9, caractérisé en ce que l'organe élastique (23) vient en prise dans une zone, éloignée de l'axe de pivotement (22), de la bride de contre-appui (6, 6') et de la plaque de verrouillage (18, 18').
